# EUROPÄISCHE PATENTANMELDUNG

(11) **EP 1 385 255 A1**
(43) Veröffentlichungstag der Anmeldung: **28.01.2004**
(21) Anmeldenummer: 03015154.2
(22) Anmeldetag: 04.07.2003
(51) Int. Cl.: H02K 11/00, H02H 7/09

(54) **Elektrisches Antriebssystem**

(30) Priorität: 10.07.2002 DE 10230992
(71) Anmelder: ZF FRIEDRICHSHAFEN AG, 88038 Friedrichshafen (DE)
(72) Erfinder: Sigg, Peter, 88090 Immenstaad (DE)

(57) **Zusammenfassung**

Bei einem elektrischen Antriebssystem mit mindestens einer wechselrichtergespeisten elektrischen Maschine werden Beschaltungsmaßnahmen direkt an bzw. in unmittelbarer Nähe von Klemmen der elektrischen Maschine angebracht, um Überspannungen zu vermeiden.

## Beschreibung

Die Erfindung betrifft ein elektrisches Antriebssystem nach der im Oberbegriff von Anspruch 1 näher definierten Art.

Ein elektrisches Antriebssystem umfasst Bauglieder für die Umwandlung von elektrischer Energie in mechanische Energie und zur Steuerung oder Regelung der Energieumwandlung. Das Gesamtverhalten eines elektrischen Antriebssystems wird von den Eigenschaften der einzelnen Bauglieder und ihrem Zusammenwirken bestimmt. Aufgrund der gestiegenen Anforderungen an das dynamische Verhalten elektrischer Antriebe, an die Genauigkeit und an den Schutz von Stellgliedern, Maschinen und Anlagenteilen werden gesteuerte und geregelte Antriebssysteme eingesetzt. Zum Betrieb elektrischer Antriebssysteme sind Stellglieder notwendig, die je nach Verwendung in Verbindung mit der elektrischen Maschine das dynamische Verhalten des elektrischen Antriebssystems bestimmen. Für große Stellbereiche bei gleichzeitiger guter Dynamik und sehr gutem Wirkungsgrad werden häufig Wechselrichter zur Umwandlung von Gleichstrom in Wechselstrom verwendet. Ein störungsfreier Betrieb eines solchen elektrischen Antriebssystems mit Wechselrichter-Speisung ist nur mit Hilfe einer entsprechenden Schutztechnik zur Begrenzung von Überspannungen möglich, um die elektrischen und elektronischen Bauteile vor kurzen, energiereichen Spannungsspitzen zu schützen, die zu Störungen oder zum Ausfall des gesamten elektrischen Antriebssystems führen können. Bei elektrischen Antriebssystemen mit einer wechselrichtergespeisten elektrischen Maschine können diese Spannungsspitzen bzw. Überspannungen an den Wicklungen durch eine einsetzende Teilentladung an der Wicklungsisolation zu einer Schädigung dieser Wicklungsisolation führen. Ein beispielsweise auf die Wicklung eines Elektromotors aufgebrachter Isolierlack wird durch die Teilentladungen während seiner Betriebszeit fortlaufend angegriffen und zerstört, wodurch es zur Zerstörung der Isolation als solche kommt. Um diese Spannungsspitzen zu vermeiden bzw. zu reduzieren werden bei elektrischen Antriebssystemen nach dem Stand der Technik Beschaltungsmaßnahmen im Wechselrichter selbst vorgenommen. Dazu können beispielsweise Ausgangsdrosseln oder Beschaltungsmaßnahmen an Leistungsschaltern verwendet werden. Diese Beschaltungsmaßnahmen setzen sich zumeist aus Widerständen, Kondensatoren und Dioden oder deren Kombinationen zusammen.

Diese aus dem Stand der Technik bekannten Verfahren zur Reduzierung von Spannungsspitzen weisen jedoch den Nachteil auf, daß sie keinen direkten Einfluss auf das elektrische Antriebssystem ausüben können und deshalb nur mittelbar die Spannungsspitzen an der elektrischen Maschine reduzieren. Dabei handelt es sich folglich nicht um ein aktives Vermeiden von Spannungsspitzen, sondern um eine Präventivmaßnahme, die die Wahrscheinlichkeit der Entstehung von Überspannungen reduziert.

Der vorliegenden Erfindung liegt die Aufgabe zugrunde ein elektrisches Antriebssystem darzustellen, das aktiv das Entstehen von Spannungsspitzen vermeidet, unempfindlich gegenüber Spannungsspitzen reagiert und einen sicheren Betrieb über die Gesamtbetriebsdauer gewährleistet.

Die der Erfindung zugrundeliegende Aufgabe wird durch ein, auch die kennzeichnenden Merkmale des Hauptanspruchs aufweisendes, gattungsgemäßes elektrisches Antriebssystem gelöst.

Durch ein möglichst unmittelbares Anbringen von Beschaltungsmaßnahmen an ihrem Entstehungsort können Spannungsspitzen effektiv begrenzt werden. Diese Beschaltungsmaßnahmen werden idealerweise direkt an den Klemmen der elektrischen Maschine oder zumindest in ihrer unmittelbaren Nähe angebracht. Die Beschaltungsmaßnahmen können sowohl aus passiven Komponenten, wie beispielsweise Kondensatoren, Widerstände oder deren Kombinationen, aus aktiven Komponenten, wie z. B. Varistoren, spannungsbegrenzenden Dioden, aktive Klemmschaltungen oder deren Kombinationen oder aus Kombinationen von passiven und aktiven Komponenten bestehen. Durch die Lage der Beschaltungsmaßnahmen können die Klemmenspannungen direkt beeinflusst werden, weitgehend unabhängig von den Eigenschaften des Wechselrichters und des dazwischengeschalteten Kabels, insbesondere können dessen längenbedingten dynamischen Effekte umgangen werden. Durch die Verwendung einer schnellen dreiphasigen Gleichrichterbrücke als Beschaltungsmaßnahme werden die drei Klemmenspannungen gleichgerichtet und auf ein speziell gestaltetes Begrenzerelement zur Spannungsbegrenzung geführt. Dieses Begrenzerelement ist idealerweise so ausgeführt, daß es nur bei Spannungen in der Nähe des Schutzpegels für die Drahtisolation anspricht und die Klemmenspannung der Maschine begrenzt, ansonsten die Spannungsquelle nicht belastet. Mittels einer Kombination aus Leistungskondensatoren und einem Leistungstransistor kann dieses Element so gestaltet sein, daß die zwangsläufig entstehenden Leistungsspitzen im Begrenzungsfall von der Schaltung aufgenommen und in der restlich verbleibenden Zeit gemittelt wieder abgegeben werden. Diese spezielle Beschaltungsmaßnahme bietet Vorteile hinsichtlich unerwünschter Nebenwirkungen wie zusätzliche Belastung der Leistungsschalter im Wechselrichter, Fehlereinflüsse auf die Regelung der elektrischen Maschine und zusätzliche schwer beherrschbare Verluste im Beschaltungsbauteil. Durch die erfindungsgemäße Spannungsbegrenzung entstehen weiterhin Gewichts- und Kostenvorteile gegenüber herkömmlichen Lösungen mit Drosseln. Durch die spezielle Schaltungstechnik mittels Gleichrichterbrücke und nur einer, zudem unipolarer, Begrenzerschaltung, wird der Schaltungsaufwand gegenüber drei bipolaren bzw. sechs unipolaren Elementen bei herkömmlicher Begrenzungstechnik deutlich reduziert. Durch die Erfindung werden weiterhin Zusatzverluste im Zusammenhang mit der Beherrschung von Überspannungen an der elektrischen Maschine auf die Energien reduziert, die eine schädigende Wirkung in der elektrischen Maschine ausüben könnten. Feste Stromwärmeverluste in Drosseln bzw. Begrenzungselementen mit zu geringer nichtlinearer Charakteristik oder Verschiebungsströme durch Beschaltungskondensatoren können weitestgehend vermieden werden. Mögliche Anwendungsgebiete des erfindungsgemäßen Antriebssystems sind beispielsweise Fahrantriebe, Nebenantriebe, Bahnantriebe und Maschinenantriebe.

Vorteilhafte und zweckmäßige Ausgestaltungen der Erfindung sind in den Unteransprüchen angegeben. Die Erfindung ist aber nicht auf die Merkmalskombinationen der Ansprüche beschränkt, vielmehr ergeben sich für den Fachmann weitere sinnvolle Kombinationsmöglichkeiten von Ansprüchen und einzelnen Anspruchsmerkmalen aus der Aufgabenstellung.

## Patentansprüche

1. Elektrisches Antriebssystem mit mindestens einer wechselrichtergespeisten elektrischen Maschine, **dadurch gekennzeichnet, daß** Beschaltungsmaßnahmen direkt an bzw. in unmittelbarer Nähe von Klemmen der elektrischen Maschine angebracht sind.

2. Elektrisches Antriebssystem nach Anspruch 1, **dadurch gekennzeichnet, daß** die Beschaltungsmaßnahmen aus passiven und/oder aktiven und/oder Kombinationen von aktiven und passiven Elementen bestehen.

3. Elektrisches Antriebssystem nach Anspruch 1, **dadurch gekennzeichnet, daß** die Beschaltungsmaßnahmen aus einer schnellen dreiphasigen Gleichrichterbrücke mit einer unipolaren Begrenzerschaltung besteht.

4. Verwendung eines elektrischen Antriebssystems nach einem der vorangegangenen Ansprüche bei Kraftfahrzeugen, Schienenfahrzeugen, Werkzeugmaschinen und Industrierobotern,
